# EUROPÄISCHE PATENTSCHRIFT

(11) **EP 3 289 253 B1**
(45) Veröffentlichungstag und Bekanntmachung des Hinweises auf die Patenterteilung: **04.09.2019**
(21) Anmeldenummer: 17709047.9
(22) Anmeldetag: 06.03.2017
(51) Int. Cl.: F16K 11/074

(54) **UMSTELLVENTIL**
CHANGEOVER VALVE
SOUPAPE D'INVERSION

(30) Priorität: 08.03.2016 DE 202016101244 U
(43) Veröffentlichungstag der Anmeldung: 07.03.2018
(73) Patentinhaber: Flühs Drehtechnik GmbH, D-58515 Lüdenscheid (DE)
(72) Erfinder: LANGE, Lutz, 58511 Lüdenscheid (DE)
(74) Vertreter: Patentanwälte Dörner & Kötter PartG mbB
(86) Internationale Anmeldenummer: PCT/EP2017/055172
(87) Internationale Veröffentlichungsnummer: WO 2017/153327

(56) Entgegenhaltungen:
- US-A1- 2005 116 065
- US-A1- 2008 190 501
- US-A1- 2013 048 123
- US-B1- 6 805 151

## Beschreibung

Die Erfindung betrifft ein Umstellventil, umfassend ein Wandanschlussgehäuse mit wenigstens einem Einlasskanal und wenigstens drei Auslasskanälen, die in einem Ventilsitz zur Aufnahme eines Ventiloberteils münden, welches Ventiloberteil ein Bodenstück mit wenigstens drei Auslassöffnungen aufweist, die über den Ventilsitz mit jeweils einem der wenigstens drei Auslasskanäle verbindbar sind, sowie weiterhin einen Zulauf aufweist, der mit dem wenigstens einen Einlasskanal verbunden ist und der über eine Steuerscheibe, die über eine Spindel, mit der sie im Eingriff ist, relativ zu einer feststehenden Einlassscheibe rotierbar ist, mit wenigstens einer der wenigstens drei Auslassöffnungen verbindbar ist, wobei das Bodenstück wenigstens einen Positionierstift aufweist, der in wenigstens eine in dem Ventilsitz angeordnete Positionsbohrung eingreift.

Umstellventile sind in unterschiedlichsten Ausführungen bekannt. Sie dienen der wahlweisen Zuordnung von Fluidströmen, beispielsweise eines Wasserstroms zu einem Duschkopf oder einem Badewannenzulauf. Zunehmend kommen auch Umstellventile zum Einsatz, die eine Zuordnung eines Fluidstroms zu drei verschiedenen Ausgabestellen ermöglichen, beispielsweise die Zuordnung eines Wasserstroms zu einem Badewannenauslauf, einer Kopfbrause und einer Handbrause. Derartige Umstellventile werden vielfach in einer Wand montiert. Dabei erfolgt die Montage in zwei Schritten. Zunächst wird ein Wandanschlussgehäuse in eine Wand eingeputzt und mit den erforderlichen Zu- und Ablaufleitungen verbunden. Nachfolgend wird die Wand regelmäßig verfliest oder mit einem Dekorputz oder ähnlichem versehen. Abschließend erfolgt - oftmals durch einen anderen Monteur - der Einbau der Armaturen sowie auch eines Ventiloberteils, in das bereits in der Wand befindliche Wandanschlussgehäuse. Ein solches Ventiloberteil ist z.B. in der US 2013/048123 A1 beschrieben. Dabei kann es vorkommen, dass entweder aufgrund eines fehlerhaften Einbaus des Wandanschlussgehäuses, oder auch aufgrund einer Planänderung des Bauherrn, nach Einbau des Ventiloberteils in das Wandanschlussgehäuse eine falsche Zuordnung der Spindelstellung des Ventiloberteils bzw. des mit der Spindel verbundenen Bedienhebels vorliegt. Zur Änderung der Zuordnung ist in einem solchen Fall der Ausbau und die Neumontage des Wandanschlussgehäuses erforderlich.

Hier will die Erfindung Abhilfe schaffen. Der Erfindung liegt die Aufgabe zu Grunde, ein Umstellventil bereitzustellen, das eine Änderung der Zuordnung von Spindelstellungen des Ventiloberteils zu den einzelnen Fluidströmen ohne Ausbau des Wandanschlussgehäuses ermöglicht. Gemäß der Erfindung wird diese Aufgabe durch die Merkmale des kennzeichnenden Teils des Patentanspruchs 1 gelöst.

Mit der Erfindung ist ein Umstellventil bereitgestellt, dass eine Änderung der Zuordnung der Spindelstellung des Ventiloberteils zu den einzelnen Fluidausgabestellen ohne den Ausbau des Wandanschlussgehäuses ermöglicht. Dadurch, dass in dem Ventilsitz wenigstens zwei Positionsbohrungen zum Eingriff des wenigstens einen Positionierstifts in verschiedenen Einbaustellungen des Ventiloberteils vorhanden sind, ist eine Änderung der Zuordnung der einzelnen Fluidausgabestellen zu den Spindelpositionen das Ventiloberteils durch eine Veränderung der Einbaustellung des Ventiloberteils in dem Wandanschlussgehäuse ermöglicht.

Der Begriff "Positionierbohrung" ist vorliegend nicht auf runde Querschnitte begrenz. Vielmehr sind unter diesem Begriff alle Vertiefungen oder Ausnehmungen zu subsummieren, die geeignet und bestimmt sind, zur definierten Positionierung des Umstellventils einen mit dieser Vertiefung bzw. Ausnehmung korrespondierenden Positionierstift aufzunehmen. Auch der Begriff "Positionierstift" ist nicht auf runde Querschnitte begrenzt. Hierunter sind alle Vorsprünge zu subsummieren, die geeignet und bestimmt sind, zur definierten Positionierung des Umstellventils von einer korrespondierenden Vertiefung bzw. Ausnehmung aufgenommen zu werden. So können beispielsweise Positionierbohrung und Positionierstift auch einen polygonen oder ellipsenförmigen Querschnitt aufweisen.

In Weiterbildung der Erfindung sind drei Positionsbohrungen in dem Ventilsitz angeordnet, wobei die drei mit den Auslassöffnungen des Bodenstücks des Ventiloberteils korrespondierenden Auslasskanäle des Ventilsitzes jeweils um 120° zueinander versetzt angeordnet ist. Hierdurch ist eine flexible Neuzuordnung der Auslasskanäle des Wandanschlussgehäuses zu den Auslassöffnungen des Bodenstücks des Ventiloberteils ermöglicht. Das Ventiloberteil wird hierzu mit seinem Positionierstift einfach in eine der drei versetzt zueinander angeordneten Positionierbohrungen eingesetzt.

In Ausgestaltung der Erfindung sind die Steuerscheibe und die Einlassscheibe derart ausgebildet, dass der Zulauf in wenigstens einer Drehstellung der Steuerscheibe relativ zur Einlassscheibe mit zwei der drei Auslassöffnungen verbunden ist. Hierdurch ist eine gleichzeitige Zuordnung des Fluidstroms zu zwei Auslasskanälen des Wandanschlussgehäuses ermöglicht, wie es beispielsweise bei einer gleichzeitigen Wasserversorgung einer Kopfbrause und einer Seitenbrause gewünscht ist.

In weiterer Ausgestaltung der Erfindung weist die Einlassscheibe wenigstens eine, bevorzugt drei Durchgangsbohrungen auf, die trichterförmig sich in Richtung der Steuerscheibe erweiternd ausgebildet sind. Hierdurch ist eine flexible Zuordnung des Zulaufstroms zu ein oder auch zwei Auslasskanälen über eine entsprechende Stellung der Steuerscheibe ermöglicht.

In Weiterbildung der Erfindung ist der Zulauf durch wenigstens ein seitlich in dem Ventiloberteil angeordnetes Fenster gebildet. Hierdurch ist die konstruktive Gestaltung von Ventiloberteil und Ventilsitz vereinfacht.

In weiterer Ausgestaltung der Erfindung weist die Steuerscheibe genau eine Durchgangsöffnung auf, wobei die Durchgangsöffnung eine im Wesentlichen trilobulare Form aufweist. Hierdurch ist eine flexible Zuordnung des Zulaufwasserstroms zu einem oder zwei Auslasskanälen des Wandanschlussgehäuses ermöglicht.

Andere Weiterbildungen und Ausgestaltungen der Erfindung sind in den übrigen Unteransprüchen angegeben. Ein Ausführungsbeispiel ist in den Zeichnungen dargestellt und wird nachfolgend im Einzelnen beschrieben. Es zeigen:

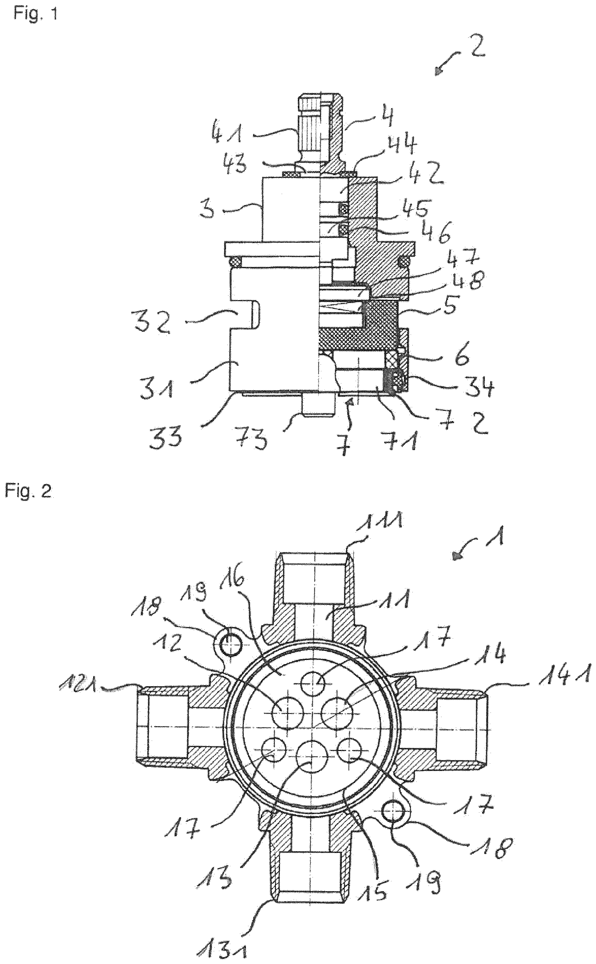

- Figur 1: die schematische Darstellung eines Ventiloberteils eines Umstellventils;
- Figur 2: die schematische Darstellung eines Wandanschlussgehäuses eines Umstellventils;
- Figur 3: die Darstellung des Wandanschiussgehäuses aus Figur 2 in der Seitenansicht;
- Figur 4: die schematische Darstellung der Steuerscheibe des Ventiloberteils aus Figur 1
a) in der Ansicht von unten;
b) in Schnittdarstellung B-B;
c) in Schnittdarstellung A;
d) in der Draufsicht;
- Figur 5: die schematische Darstellung der Einlassscheibe des Ventiloberteils aus Figur 1
a) in der Draufsicht;
b) in der Ansicht von unten;
c) im Längsschnitt;
- Figur 6: die schematische Darstellung der Überdeckungen von Steuerscheibe und Auslassscheibe des Ventiloberteils aus Figur 1 in den Stellungen
a) Ventil geschlossen;
b) erste Druchgangsbohrung der Einlassscheibe geöffnet;
c) erste und zweite Durchgangsbohrung der Einlassscheibe geöffnet;
d) zweite Durchgangsbohrung der Einlassscheibe geöffnet;
e) zweite und dritte Durchgangsbohrung der Einlassscheibe geöffnet;
f) dritte Durchgangsbohrung der Einlassscheibe geöffnet.

Das als Ausführungsbeispiel gewählte Umstellventil besteht im Wesentlichen aus einem Wandanschlussgehäuses 1, das ein Ventiloberteil 2 aufnimmt.

Das Wandanschlussgehäuses 1 ist im Ausführungsbeispiel aus Messing hergestellt und umfasst einen becherförmig ausgebildeten Ventilraum 15, in den bodenseitig ein Ventilsitz 16 eingebracht ist. In den Ventilsitz 16 münden jeweils um 120° versetzt zueinander drei Auslasskanäle 12, 13, 14, die jeweils mit einem außen an den Ventilraum 15 angeformten Auslassanschluss 121, 131, 141 verbunden sind. Weiterhin ist außen an dem Ventilraum 15 ein Einlassanschluss 111 angeformt, der mit einem Einlasskanal 11 verbunden ist, der seitlich in den Ventilraum 15 mündet. Der Einlassanschluss 111 sowie die drei Auslassanschlüsse 121, 131, 141 sind jeweils um 90° versetzt zueinander an dem Ventilraum 15 angeformt und dienen dem Anschluss von Fluidzulauf- bzw, Ablaufleitungen. In dem Ventilsitz 16 sind weiterhin um 120° versetzt zueinander drei Positionierbohrungen 17 eingebracht, welche jeweils in Form einer Sacklochbohrung ausgebildet sind. Die Positionierbohrungen 17 dienen der alternativen Aufnahme des Positionierstifts 73 des Bodenstücks 7 des Ventiloberteils 2. Weiterhin sind jeweils zwischen zwei Einlass- bzw. Auslassanschlüssen 111, 121, 131, 141 zwei Befestigungslaschen 18 angeordnet, die jeweils mit einer Bohrung 19 versehen sind. Die Befestigungslaschen 18 dienen der Fixierung des Wandanschlussgehäuses 1 in dem Einbauraum einer Wand. Zum Anschluss einer Armatur zur Bedienung des Ventiloberteils 2 ist das Anschlussgehäuse 1 mit einem Außengewinde 151 versehen.

Das als Ausführungsbeispiel gewählte Ventiloberteil 2 weist ein Kopfstück 3 auf, das von einer in ihm radial geführten Spindel 4 mittig durchsetzt ist. Mit der Spindel 4 ist eine Steuerscheibe 5 formschlüssig verbunden und im Kopfstück 3 radial geführt. An seiner der Spindel 4 abgewandten Seite der Steuerscheibe 5 ist eine Einlassscheibe 6 in dem Kopfstück 3 vorgesehen, an die sich ein Bodenstück 7 anschließt, dass mit dem Ventilsitz 16 des Ventilraums 15 des Wandanschlussgehäuses 1 zur Anlage kommt.

Das Kopfstück 3 besteht aus einem symmetrischen Hohlkörper, dessen beide Stirnflächen offen sind. Auf seiner dem Ventilsitz 16 zugewandten Seite weist das Kopfstück 3 einen hülsenartigen Teil 31 auf, in dem zwei Durchtrittsfenster 32 vorgesehen sind. Nach dem Einbringen in den Ventilraum 15 liegt ein Bund 33 des Kopfstücks 3 auf dem Ventilsitz 16 des Ventilraums 15 auf. In dem hülsenartigen Teil 31 ist innen im Bereich des Bundes 33 eine Hinterdrehung 34 angeordnet.

Die Spindel 4 ist im Wesentlichen massiv ausgeführt. Sie ist an ihrer dem Kopfstück 3 abgewandten Stirnseite außen als Außenvielkant 41 ausgeführt. Anschließend ist außen an der Spindel 4 eine Zylinderfläche 42 vorgesehen, mit der die Spindel 4 in dem Kopfstück 3 radial geführt ist. Zwischen der Zylinderfläche 42 und dem Außenvielkant 41 ist ein Einstich 43 vorgesehen, in den eine Wellensicherung 44 in Form eines Sprengrings federnd eingelegt ist. Die Wellensicherung 44 verhindert das Eindringen der Spindel 4 in das Kopfstück 3 über das vorgesehene Maß hinaus. Weiterhin sind in der Zylinderfläche 42 zwei Ringnuten 45 eingebracht, die O-Ringe 46 aufnehmen. Auf der dem Außenvielkant 41 entgegengesetzten Seite der Spindel 4 ist eine Scheibe 47 angeformt, die auf ihrer dem Bund 33 zugewandten Seite einen Mitnehmer 48 aufweist.

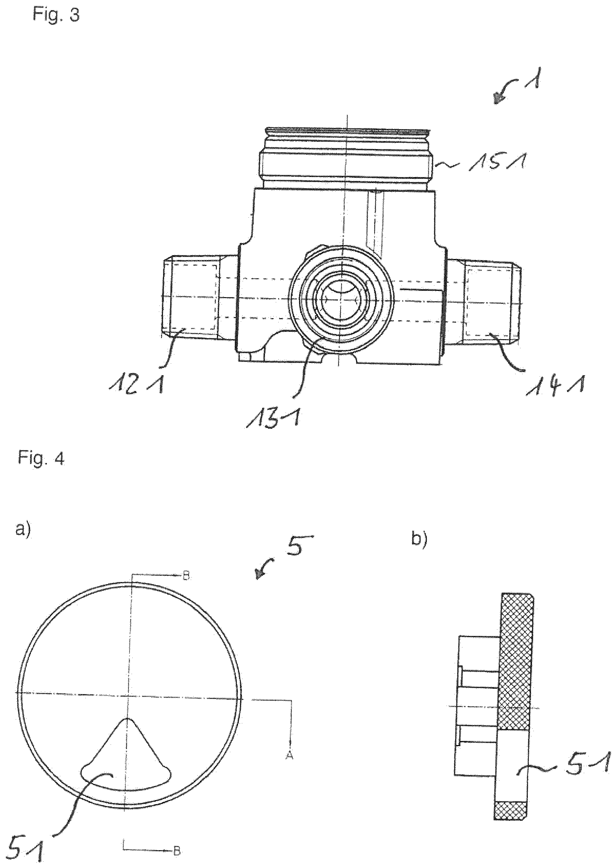

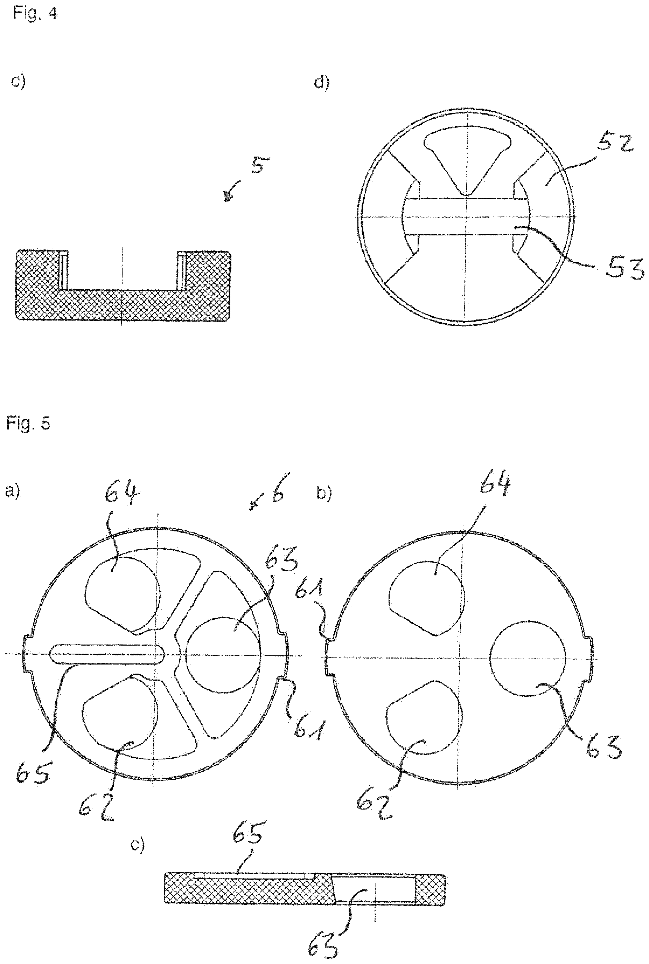

Die Steuerscheibe 5 ist im Wesentlichen als kreisrunde Scheibe ausgebildet, in die eine trilobulare Durchgangsöffnung 51 eingebracht ist. Auf ihrer der Spindel 32 zugewandten Seite weist die Steuerscheibe 5 zwei diametral zueinander angeordnete bogenförmige Absätze 52 auf. Die bogenförmigen ringförmigen Absätze 52 umfassen im montierten Zustand den Mitnehmer 48 der Spindel 4, An den Absätzen 52 sind Ausnehmungen 53 ausgebildet, in die der Mitnehmer 48 eingreift (vgl. Figur 4d)).

Die Einlassscheibe 6 ist in Figur 5 dargestellt. Sie weist auf ihrem Umfang zwei sich diametral gegenüberliegende Nasen 61 auf. Mit den Nasen 61 fasst die Einlassscheibe 6 in Ausnehmungen, die hierzu in dem hülsenförmigen Teil 31 des Kopfstücks 3 vorgesehen sind. Die Einlassscheibe 6 ist damit drehfest in dem Kopfstück 3 angeordnet. Die Einlassscheibe 6 weist drei um 120° versetzt zueinander angeordnete Durchgangsbohrungen 62, 63, 64 auf, die jeweils trichterförmig sich in Richtung der Steuerscheibe 5 erweiternd ausgebildet sind. Zwischen zwei Durchgangsbohrungen 62, 63 ist auf der zwischen den Nasen 61 verlaufenden Mittellinie eine längliche Vertiefung 65 angeordnet, die sich bis in den Mittelpunkt der Einlassscheibe erstreckt. Die längliche Vertiefung 65 dient der Ausspülung von sich zentrisch zwischen Steuerscheibe 5 und Einlassscheibe 6 bildendem Abrieb.

Das Bodenstück 7 ist im Ausführungsbeispiel aus Kunststoff hergestellt und weist auf seinem Umfang ebenfalls zwei sich diametral gegenüberliegende Nasen auf, mit denen es in Ausnehmungen, die hierzu in dem hülsenförmigen Teil 31 des Kopfstücks 3 vorgesehen sind, eingreift. Es ist damit drehfest in dem Kopfstück 3 angeordnet. Das Bodenstück 7 weist drei um 120° zueinander versetzt angeordnete Auslassöffnungen 71 auf, welche mit den drei Durchgangsbohrungen 62, 63, 64 der Einlassscheibe 6 in Überdeckung positionierbar sind und in denen jeweils eine Lippendichtung 72 zur Abdichtung gegenüber den Auslasskanälen 12, 13, 14 des Ventilsitzes 16 des Ventilraums 15 angeordnet ist. Weiterhin weist das Bodenstück 7 auf seiner der Einlassscheibe 6 abgewandten Unterseite einen zylinderförmigen Positionierstift 73 auf, der mit den Positionierbohrungen 17 des Ventilsitzes 16 korrespondiert und der Positionierung des Ventiloberteils 2 in dem Ventilraum 15 des Wandanschlussgehäuses 1 dient.

Im Ausführungsbeispiel ist das Ventiloberteil 2 derart auf dem Ventilsitz 16 des Ventilraums 15 des Wandanschlussgehäuses 1 positioniert, dass die erste Durchgangsbohrung 62 der Einlassscheibe 6 über eine Auslassöffnung 71 des Bodenstücks 7 mit dem ersten Auslasskanal 12 des Wandanschlussgehäuses 1 verbunden ist. Die zweite Durchgangsbohrung 63 sowie die dritte Durchgangsbohrung 64 der Einlassscheibe 6 sind in dieser Position über Auslassöffnungen 71 des Bodenstücks 7 mit dem zweiten Auslasskanal 13 bzw. dem dritten Auslasskanal 14 des Wandanschlussgehäuses 1 verbunden. Weiterhin ist das Ventiloberteil 2 über die in dem Kopfstück 3 angeordneten Durchtrittsfenster 32 mit dem in den Ventilraum 15 mündenden Einlasskanal 11 des Wandanschlussgehäuses 1 verbunden.

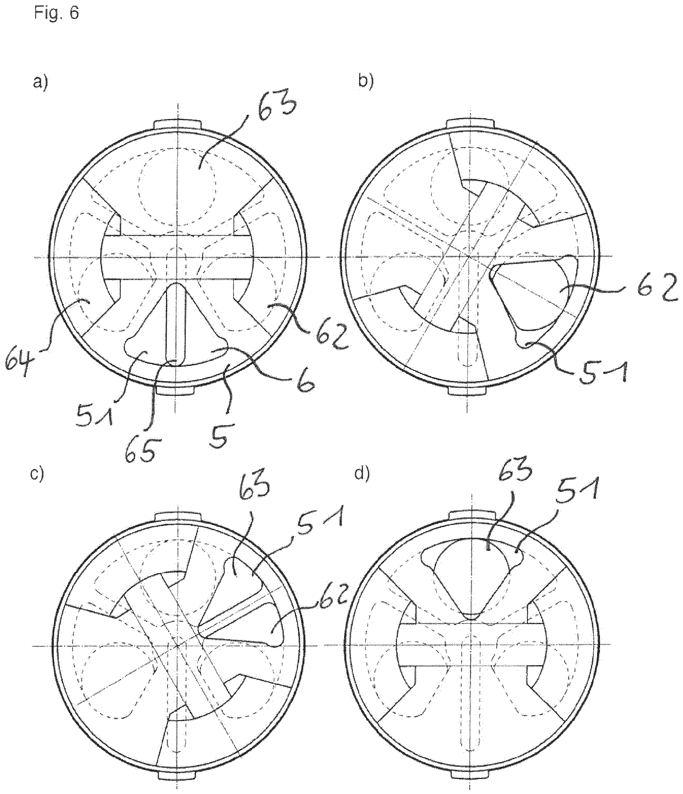

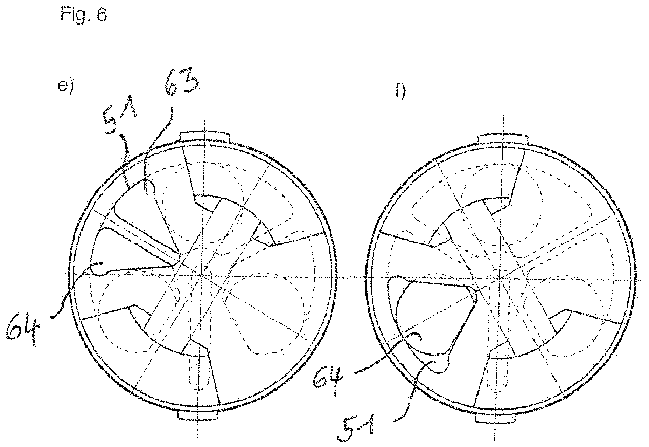

In Figur 6 sind unterschiedliche Stellungen des Ventiloberteils 2 des Umstellventils in Abhängigkeit von der über die Spindel 4 einstellbaren Drehposition der Steuerscheibe 5 relativ zur Einlassscheibe 6 dargestellt:
In der Darstellung gemäß Figur 6a) befindet sich die Durchgangsöffnung 51 der Steuerscheibe 5 über der Vertiefung 65 der Einlassscheibe 6. Alle Durchgangsbohrungen 62, 63, 64 der Einlassscheibe 6 sind durch die Steuerscheibe 5 verschlossen. Das Ventiloberteil 2 befindet sich somit in der Stellung "geschlossen".

In der Stellung gemäß Figur 6b) ist die Durchgangsöffnung 51 der Steuerscheibe 5 mit der ersten Durchgangsbohrung 62 der Einlassscheibe 6 in Überdeckung. In dieser Stellung ist der Einlasskanal 11 des Wandanschlussgehäuses 1 über die Durchtrittsfenster 32 des Kopfstücks 3 mit dem ersten Auslasskanal 12 verbunden. Das Ventiloberteil befindet sich in der Stellung "Wasserzufluss über den ersten Auslassanschluss".

In der Stellung gemäß Figur 6c) ist die Durchgangsöffnung 51 der Steuerscheibe 5 sowohl mit der ersten Durchgangsbohrung 62, als auch mit der zweiten Durchgangsbohrung 63 der Einlassscheibe 6 in Überdeckung. In dieser Position ist der Einlasskanal 11 sowohl mit dem ersten Auslasskanal 12, als auch mit dem zweiten Auslasskanal 13 verbunden. Das Ventiloberteil 2 befindet sich somit in der Stellung "Wasserzufluss über den ersten und den zweiten Auslassanschluss".

In der Stellung gemäß Figur 6d) befindet sich die Durchgangsöffnung 51 der Steuerscheibe 5 in Überdeckung mit der zweiten Durchgangsbohrung 63 der Einlassscheibe 6. In dieser Position ist der Einlasskanal 11 mit dem zweiten Auslasskanal 13 verbunden. Das Ventiloberteil 2 befindet sich somit in der Stellung "Wasserzufluss durch den zweiten Auslassanschluss".

In der Stellung gemäß Figur 6e) befindet sich die Durchgangsöffnung 51 der Steuerscheibe 5 sowohl mit der zweiten Durchgangsbohrung 63, als auch mit der dritten Durchgangsbohrung 64 der Einlassscheibe 6 in Überdeckung. Der Einlasskanal 11 ist in dieser Stellung sowohl mit dem zweiten Auslasskanal 13, als auch mit dem dritten Auslasskanal 14 verbunden. Das Ventiloberteil 2 befindet sich folglich in der Stellung "Wasserzufluss durch den zweiten und dritten Auslassanschluss".

In der Stellung gemäß Figur 6f) befindet sich die Durchgangsöffnung 51 der Steuerscheibe 5 in Überdeckung mit der dritten Durchgangsbohrung 64 der Einlassscheibe 6. In dieser Stellung ist der Einlasskanal 11 mit dem dritten Auslasskanal 14 des Wandanschlussgehäuses 1 verbunden. Das Ventiloberteil 2 befindet sich folglich in der Stellung "Wasserzufluss über den dritten Auslassanschluss".

Die drei um 120° versetzt zueinander in dem Ventilsitz 16 angeordneten Positionierbohrungen 17 ermöglichen drei alternative, jeweils um 120° verdreht zueinander positionierte Anordnungen des Ventiloberteils 2 auf dem Ventilsitz 16 des Ventilraums 15 des Wandanschlussgehäuses 1, wodurch die Zuordnungen der einzelnen Auslasskanäle 12, 13, 14 zu den Durchgangsbohrungen 62, 63, 64 der Einlassscheibe 6 des Ventiloberteils 2 einstellbar sind. Beispielsweise ist durch eine um 120° verdrehte Positionierung des Ventiloberteils 2 in dem Ventilsitz 16 ausgehend von dem Ausführungsbeispiel gemäß Figur 6 nunmehr eine Zuordnung der ersten Durchgangsbohrung 62 der Einlassscheibe 6 zum zweiten Auslasskanal 13, eine Zuordnung der zweiten Durchgangsbohrung 63 der Einlassscheibe 6 zum dritten Auslasskanal 14 sowie eine Zuordnung der dritten Durchgangsbohrung 64 der Einlassscheibe 6 zum ersten Auslasskanal 12 des Wandanschlussgehäuses 6 erzielt. Durch die Drehpositionierung des Ventiloberteils 2 in dem Ventilsitz 16 des Ventilraums 15 des Wandanschlussgehäuses 1 ist so eine einfache Veränderung der Zuordnung der Durchgangsbohrungen 62, 63, 64 der Einlassscheibe 6 zu den Auslaufkanäle 12, 13, 14 des Wandanschlussgehäuses 1 ermöglicht.

## Patentansprüche

1. Umstellventil, umfassend ein Ventiloberteil (2) sowie ein Wandanschlussgehäuse (1) mit wenigstens einem Einlasskanal (11) und wenigstens drei Auslasskanälen (12, 13, 14), die in einem Ventilsitz (16) zur Aufnahme des Ventiloberteils (2) münden, welches Ventiloberteil (2) ein Bodenstück (7) mit wenigstens drei Auslassöffnungen (71) aufweist, die über den Ventilsitz (16) mit jeweils einem der wenigstens drei Auslasskanäle (12, 13, 14) verbindbar sind, sowie weiterhin wenigstens einen Zulauf aufweist, der mit dem wenigstens einen Einlasskanal (11) verbunden ist und der über eine Steuerscheibe (5) mit wenigstens einer der wenigstens drei Auslassöffnungen (71) verbindbar ist, wobei die Steuerscheibe über eine Spindel (4), mit der sie im Eingriff ist, relativ zu einer feststehenden Einlassscheibe (6) rotierbar ist, wobei das Bodenstück (7) wenigstens einen Positionierstift (73) aufweist, der in eine in dem Ventilsitz (16) angeordnete Positionierbohrung (17) eingreift, **dadurch gekennzeichnet, dass** in dem Ventilsitz (16) wenigstens zwei Positionierbohrungen (17) zum Eingriff des wenigstens einen Positionierstifts (73) in verschiedenen Einbaustellungen des Ventiloberteils (2) vorhanden sind.

2. Umstellventil nach Anspruch 1, **dadurch gekennzeichnet, dass** drei Positionierbohrungen (17) in dem Ventilsitz (16) angeordnet sind, wobei die drei mit den Auslassöffnungen (71) des Bodenstücks (7) des Ventiloberteils (2) korrespondierenden Auslasskanäle (12, 13, 14) des Ventilsitzes (16) jeweils um 120 Grad zueinander versetzt angeordnet sind.

3. Umstellventil nach Anspruch 1 oder 2, **dadurch gekennzeichnet, dass** die Steuerscheibe (5) und die Einlassscheibe (6) derart ausgebildet sind, dass der Zulauf in wenigstens einer Drehstellung der Steuerscheibe (5) relativ zur Einlassscheibe(6) mit zwei der drei Auslassöffnungen (71) verbunden ist.

4. Umstellventil nach einem der vorgenannten Ansprüche, **dadurch gekennzeichnet, dass** die Einlassscheibe (6) wenigstens eine, bevorzugt drei Durchgangsbohrungen (62, 63, 64) aufweist, die trichterförmig sich in Richtung der Steuerscheibe (5) erweiternd ausgebildet sind.

5. Umstellventil nach einem der vorgenannten Ansprüche, **dadurch gekennzeichnet, dass** der Zulauf durch wenigstens ein seitlich in dem Ventiloberteil (2) angeordnetes Fenster (32) gebildet ist.

6. Umstellventil nach Anspruch 5, **dadurch gekennzeichnet, dass** die Steuerscheibe (5) genau eine Durchgangsöffnung (51) aufweist, wobei die Durchgangsöffnung (51) eine im Wesentlichen trilobulare Form aufweist.

## Claims

1. Changeover valve comprising a valve top (2) as well as a wall connection housing (1) with at least one inlet channel (11) and at least three outlet channels (12, 13, 14), which open into a valve seat (16) for receiving the valve top (2), which valve top (2) has a base piece (7) with at least three outlet openings (71), which can be connected via the valve seat (16) in each case to one of the at least three outlet channels (12, 13, 14), and further has at least one feed, which is connected to the at least one inlet channel (11) and which can be connected to at least one of the at least three outlet openings (71) via a control disc (5), wherein the control disc is rotatable relative to a stationary inlet disc via a spindle, with which it engages, wherein the base piece (7) has at least one positioning pin (73), which engages in a positioning bore (17) arranged in the valve seat (16), **characterised in that** in the valve seat (16) at least two positioning bores (17) for engaging with the at least one positioning pin (73) in different assembly positions of the valve top (2) are present.

2. Changeover valve according to claim 1, **characterised in that** three positioning bores (17) are arranged in the valve seat (16), wherein the three outlet channels (12, 13, 14) of the valve seat (169 corresponding with the outlet openings (71) of the base piece (7) of the valve top (2) are arranged offset by 120 degrees in each case with respect to one another.

3. Changeover valve according to claim 1 or 2, **characterised in that** the control disc (5) and the inlet disc (6) are designed in such a manner that the feed is connected to two of the three outlet openings (71) in at least one rotational position of the control disc (5) relative to the inlet disc (6).

4. Changeover valve according to one of the previous claims, **characterised in that** the inlet disc (6) has at least one, preferably three through bores (62, 63, 64), which widen in the direction of the control disc (5) in a funnel-shaped manner.

5. Changeover valve according to one of the previous claims, **characterised in that** the feed is formed by at least one window (32) arranged laterally in the valve top (2).

6. Changeover valve according to claim 5, **characterised in that** the control disc (5) has exactly one through opening (51), wherein the through opening (51) has a substantially trilobular shape.

## Revendications

1. Soupape d'inversion, comprenant une partie supérieure (2) de soupape ainsi qu'un boîtier (1) de raccordement sur paroi avec au moins un canal d'admission (11) et au moins trois canaux d'échappement (12, 13, 14) qui aboutissent dans un siège (16) de soupape pour recevoir la partie supérieure (2) de la soupape, laquelle partie supérieure (2) de la soupape présente une pièce de fond (7) dotée d'au moins trois orifices d'échappement (71) reliables via le siège (16) de soupape avec respectivement l'un des au minimum trois canaux d'échappement (12, 13, 14), et comprenant en outre au moins une arrivée reliée avec au moins un canal d'admission (11) et qu'il est possible de la relier avec au moins l'un des au minimum trois orifices d'échappement (71), sachant que le disque de commande peut tourner via la broche (4), avec laquelle il engrène, relativement à un disque d'admission immobile, sachant que la pièce de fond (7) présente au moins une tige de positionnement (73) qui engrène dans un alésage de positionnement (17) disposé dans le siège (16) de soupape, **caractérisée en ce que** dans le siège (16) de soupape sont présents au moins deux alésages de positionnement (17) pour qu'engrène au moins une tige de positionnement (73) dans différentes positions d'incorporation de la partie supérieure (2) de soupape.

2. Soupape d'inversion selon la revendication 1, **caractérisée en ce que** trois alésages de positionnement (17) sont disposés dans le siège (16) de soupape, sachant que les trois canaux d'échappement (12, 13, 14) du siège (16) de soupape, canaux qui sont en correspondance avec les orifices d'échappement (71) de la pièce de fond (7) de la partie supérieure (2) de soupape, sont disposés décalés respectivement de 120 degrés les uns par rapport aux autres.

3. Soupape d'inversion selon la revendication 1 ou 2, **caractérisée en ce que** le disque de commande (5) et le disque d'admission (6) sont configurés de telle sorte que l'arrivée, dans au moins une position de rotation du disque de commande (5) relativement au disque d'admission (6), est reliée à deux des trois orifices d'échappement (71).

4. Soupape d'inversion selon l'une des revendications précédentes, **caractérisée en ce que** le disque d'admission (6) présente au moins un, de préférence trois, alésages traversants (62, 63, 64), configurés en entonnoirs qui vont en s'évasant en direction du disque de commande (5).

5. Soupape d'inversion selon l'une des revendications précédentes, **caractérisée en ce que** l'arrivée est formée par au moins une fenêtre (32) disposée latéralement dans la partie supérieure (2) de soupape.

6. Soupape d'inversion selon la revendication 5, **caractérisée en ce que** le disque de commande (5) présente exactement un orifice de passage (51), sachant que l'orifice de passage (51) est essentiellement de forme trilobulaire.
